# EUROPEAN PATENT APPLICATION

(11) **EP 0 571 329 A2**
(43) Date of publication of application: **24.11.1993**
(21) Application number: 93810346.2
(22) Date of filing: 12.05.1993
(51) Int. Cl.: H01G 9/02

(54) **Solid electrolytic capacitors and process for producing the same**

(30) Priority: 21.05.1992 JP 153032/92
(71) Applicant: Japat Ltd, CH-4057 Basel (CH)
(72) Inventor: Ohwa, Masaki, Dr., Kobe-shi, Hyogo-ken 657 (JP); Wernet, Wolfgang, Dr., Kobe-shi, Hyogo-ken 657 (JP); Kai, Kenichiro, Toyonaka-shi, Osaka (JP); Takeshita, Kimiya, Amagasaki-shi, Hyogo (JP)
(74) Representative: Dannappel, Hans-Jochen

(57) **Abstract**

A solid electrolytic capacitor having a solid electrolyte layer, which layer comprises an electrically conductive thermoplastic organic polymer complex having an electric conductivity of 0.1 Scm⁻¹ or more and a glass transition temperature of -100 to 150°C formed on a valve metal foil through a dielectric film. A small and larege-capacity solid electrolytic capacitor having excellent highfrequency characteristic and long-term stability is provided.

## Description

This invention relates to a small solid electrolytic capacitor employing an electrically conductive organic polymer complex as a solid electrolyte and having a large capacity and excellent high-frequency characteristics and to a process for producing the same.

Small capacitors having large capacities and excellent high-frequency characteristics are increasing in demand recently as digitized or higher frequency electronic appliances are developed.

As prior art capacitors, high-frequency capacitors using micas, plastic films, laminated ceramics, etc. and large-capacity electrolytic capacitors utilizing aluminium, tantalum, etc. are known. However, no small capacitor having a large capacity and excellent high-frequency characteristics is so far available; the high-frequency capacitors have insufficient capacities, while the large-capacity electrolytic capacitors have poor high-frequency characteristic, disadvantageously.

Electrolytic capacitors generally use, as the dielectric, porous oxide films having wide surface areas obtained by subjecting etched valve metal to chemical conversion treatment, so that they come to have large capacities. However, the electrolytic capacitors suffer a problem that the resistance is increased at the conductive electrolyte to increase equivalent series resistance (ESR), since they use liquid electrolytes and separator papers interposed, resulting in the failure of giving excellent high-frequency characteristics.

Meanwhile, solid electrolytic capacitors employing solid electrolytes having low resistance in place of the liquid electrolytes having high resistance are also known. The solid electrolytic capacitors can be roughly classified into two groups, i.e. those employing inorganic solid electrolytes and those employing organic solid conductors.

The electrolytic capacitor employing an inorganic solid electrolyte includes, for example, one in which a predetermined thickness of solid electrolyte layer is formed using tantalum as the valve metal, and repeating the procedures of subjecting the valve metal to etching and then to chemical conversion treatment to form oxide films thereon; and then applying manganese nitrate onto the oxide films, followed by heat treatment to form manganese dioxide solid electrolyte films.

However, such capacitor involves intricate manufacturing process and besides the physical properties of the valve metal and oxide films are affected by the nitric oxides generated during the heat treatment of manganese nitrate, and besides the solid electrolyte has low electrical conductivity, so that their high-frequency characteristics are not sufficiently improved.

The electrolytic capacitor employing an organic solid conductor includes, for example, the solid electrolytic capacitors described in Japanese Unexamined Patent Publication Nos. 17609/1983 and 10777/1981. This type of capacitor is produced using aluminum as the valve metal, in which oxide films are formed in the same manner as described above and after successive lamination of a capacitor paper and an cathode metal foil thereon, and after the resulting laminate is rolled up, the capacitor paper is carbonized by heating under oxygen free atmosphere. Subsequently, a melt of highly conductive 7,7,8,8-tetracyanoquinodimethane (TCNQ) complex salt is then filled into the interstice between the oxide film and cathode metal foil, and after the melt is solidified by cooling, the resulting product is packaged to provide a solid electrolyte capacitor.

This type of capacitor, however, not only involves intricate manufacturing process but also suffers insufficient heat resistance since it employes a low-moleuclar weight organic solid conductor, making it particularly difficult to subject it to a high-temperature heat treatment such as soldering.

As the electrolytic capacitor employing an organic solid conductor, a solid electrolytic capacitor using as the solid conductor an electrically conductive organic polymer in place of the low-molecular weight organic solid conductor having low heat resistance is also known.

This type of capacitor is produced by subjecting valve metal such as of aluminum to etching on the surface and then to chemical conversion treatment to form oxide films thereon, followed by formation of electrically conductive organic polymer films on the oxide films, or by forming electrically conductive organic polymer films on the valve metal by electrolytic polymerization method, followed by chemical conversion treatment of the valve metal to form oxide films thereon.

The former technique in which electrically conductive organic polymer films are formed on the oxide films can roughly be classified into the following two methods: One of them is, for example, to coat the oxide films with an electrically conductive solid electrolyte such as manganese dioxide so as to impart electrical conductivity to the oxide films, followed by formation of electrically conductive organic polymer layer thereon by electrolytic polymerization (see Japanese Unexamined Patent Publication No. 119213/1990). The other is to coat the oxide films formed on the valve metal with a melt of heat-fusible electrically conductive organic polymer as disclosed in Japanese Unexamined Patent Publication No. 74017/1990.

However, the capacitor produced by means of electrolytic polymerization according to the former method suffers problems in that the electrically conductive organic polymer films are liable to be delaminated from the oxide films due to the difference in their thermal expansion coefficient when the valve metal and oxide films undergo expansion by the Joule heat generated during high voltage and high current operation, as well as, to the poor thermoplasticity of the electrically conductive organic polymer, providing poor long-term stability and deteriorating the characteristics of the capacitor.

Meanwhile, the capacitors having electrically conductive organic polymer deposited on the oxide films, produced according to the latter method suffers a problem that the physical properties of the electrically conductive organic polymer are deteriorated when it is heat-melted.

It is an object of this invention to provide a small solid electrolytic capacitor employing as the solid electrolyte an electrically conductive thermoplastic organic polymer complex, which has excellent high-frequency characteristics and a large capacity and also a process for producing the same.

A first aspect of this invention relates to a solid electrolytic capacitor having as the solid electrolyte layer an electrically conductive thermoplastic organic polymer complex with an electric conductivity of 0.1 Scm⁻¹ or more and a glass transition temperature of -100 to 150°C formed on the valve metal foil through dielectric films.

A second aspect of this invention relates to a process for producing a solid electrolytic capacitor, in which an electrically conductive thermoplastic organic polymer complex film obtained by subjecting a heteroaromatic compound, aniline or an aniline derivative to electrochemical or chemical oxidation polymerization in the presence of a thermoplastic polyanion is laminated onto the valve metal foil by heating the film to a temperature of not lower than the glass transition temperature thereof.

The electrically conductive thermoplastic organic polymer complex includes those which are prepared by adding additives such as plasticizers to the electrically conductive polymers so as to impart thermoplasticity or those prepared by using a high-molecular weight thermoplastic polyanion as a dopant in the synthesis of the electrically conductive polymer. Among others, the complex employing the thermoplastic polyanion can suitably be employed in view of heat resistance, oxidation resistance, etc.

The monomer to be used for synthesizing an electrically conductive thermoplastic organic polymer complex can be exemplified by heteroaromatic compounds, aniline and aniline derivatives. Such monomer is subjected to electrochemical polymerization in the presence of a thermoplastic polyanion or to chemical polymerization using an oxidizing agent to obtain the desired polymer complex.

It should be appreciated that the polyheteroaromatic compound to be employed according to this invention means a homopolymer or a copolymer without departing from the gist of this invention, which contains a repeating structural unit of heteroaromatic group. Such compounds are polymers having high molecular weights or oligomers, provided that they are solid at room temperature and have film-forming properties. Suitable polyheteroaromatic compounds contain 1 to 3, preferably 1, hetero atoms selected from the group consisting of =, S and N, and 5- or 6-membered rings, in which the carbon atoms are unsubstituted or substituted with C₁-C₁₈alkyl, preferably with C₁-C₁₂alkyl.

Preferably, two of the carbon atoms are unsubstituted so as to allow an electrochemical polymerization to take place. The 5- or 6-membered ring is preferably selected from the group consisting of pyrroles, thiophenes, furans, 2,2'-bipyrroles, 2,2'-bithiophenes, 2,2'-bifurans, thiazoles, oxazoles, thiadiazoles and imidazoles.

The polyheteroaromatic compound may particularly preferably be of a pyrrole represented by the formula: 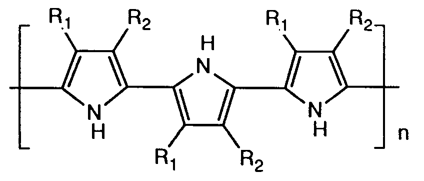
wherein R₁ and R₂ each and independently represent hydrogen or C₁-C₁₈alkyl, and represents a number of at least 5, preferably at least 10.

R₁ and R₂ may be C₁-C₁₂alkyl, for example, methyl or ethyl, and preferably hydrogen.
The NH group in the pyrrole may be substituted with C₁-C₁₂alkyl, preferably with C₁-C₆alkyl.

The aniline derivatives to be employed according to this invention includes those substituted at the 3-position with C₁-C₁₂alkyl, preferably with C₁-C₆alkyl.

The thermoplastic polyanion to be employed according to this invention essentially contains an anionic functional group such as carboxyl group, sulfonic group, phosphonic residue and sulfated alcohol group.

The carboxyl group-containing thermoplastic polyanion can be exemplified by homopolymers of acrylic acid or methacrylic acid; and copolymers of acrylic acid or methacrylic acid with comonomers such as acrylate, methacrylate, acrylamide, methacrylamide, vinyl chloride, vinylidene chloride, vinyl fluoride, vinylidene fluoride, acrylonitrile, styrene, α-methylstyrene, maleic anhydride, maleimide, vinyl ether, vinyl ester, butadiene and isoprene.

The sulfonic group-containing thermoplastic polyanion can be exemplified by homopolymers of styrenesulfonic acid, vinylsulfonic acid, 2-acrylamide-2-methyl-1-propanesulfonic acid or acrylsulfonic acid; and copolymers of styrene sulfonic acid, vinylsulfonic acid, 2-acrylamide-2-methyl-1-propanesulfonic acid or allylsulfonic acid with comonomers such as acrylate, methacrylate, acrylamide, methacrylamide, vinyl chloride, vinylidene chloride, vinyl fluoride, vinylidene fluoride, acrylonitrile, styrene, α-methylstyrene, maleic anhydride, maleimide, vinyl ether, vinyl ester, butadiene and isoprene.

Meanwhile, the phosphonic residue-containing thermoplastic polyanion can be exemplified by homopolymers of 2-phosphonicacid-ethyl methacrylate, 3-chloro-2-phosphonicacid-propyl methacrylate, 3-phosphonicacid-propyl methacrylate, 2-phosphonicacidethyl acrylate, phosphonicacid-polyoxyethylene glycol methacrylate or phosphonicacidpolyoxypropylene glycol monomethacrylate; and copolymers of said monomers with comonomers such as acrylic acid, methacrylic acid, acrylate, methacrylate, acrylamide, methacrylamide, vinyl chloride, vinylidene chloride, vinyl fluoride, vinylidene fluoride, acrylonitrile, styrene, α-methylstyrene, maleic anhydride, maleimide, vinyl ether, vinyl ester, butadiene and isoprene.

The sulfated alcohol group-containing thermoplastic polyanion includes, for example, those having the structural unit of the sulfated alcohol group-containing thermoplastic polymer represented by the following formula: 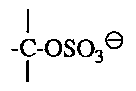
preferably in an amount of 0.1 to 0.5, and most preferably in an amount 0.2 to 0.4 per structural unit of the monomer of the polyheteroaromatic compound, aniline or aniline derivative.

The sulfated alcohol group-containing thermoplastic polymer suitably employed according to this invention has a glass transition temperature of -100 to 250°C as measured by differential scanning calorimetry (DSC). The polymerization degree of the thermoplastic polymer may be, for example, 5 to 10,000, preferably 10 to 5,000, and more preferably 10 to 1,000.

Such thermoplastic polymer preferably has a tensile strength of 5 MPa or more, particularly 20 MPa or more. The polymer may have a higher tensile strength of up to 1,000 MPa, preferably up to 500 MPa, most preferably up to 300 MPa, depending on the nature of the polymer.

The molar ratio of the free alcohol group to the sulfated alcohol group in the thermoplastic polymer is, for example, 50:1 to 1:50, preferably 10:1 to 1:10.

The sulfated alcohol group may be present at the terminal end position in the polymer backbone in the form of 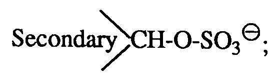
at the side chain in the form of primary-CH₂-O-SO₃^{⊖}; or at the central position in the side chain in the form of 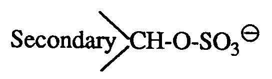
or in the form of

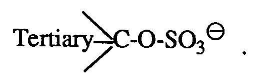

The thermoplastic polymer can be derived from polymers containing different hydroxyl groups or mixtures thereof, for example, polyesters, polyester amides, polyurethanes, polyamides, polycarbonates and polyimides, obtained from hydroxyl-containing monomers; saponified polymers of vinyl esters or ethers; hydroxylated polyolefins such as polybutadiene, polyisoprene and chloroprene; polyacrylates or polymethacrylates containing hydroxyl groups in the ester moiety, polysiloxanes containing hydroxyalkyl groups, reduced polyketones; as well as copolymers of a monomer selected from the group consisting of vinyl alcohols, acrylates, methacrylates and diolefins with a comonomer selected from the group consisting of acrylonitrile, olefins, diolefins, vinyl chloride, vinylidene chloride, vinyl fluoride, vinylidene fluoride, styrenes, α-methylstyrene, maleic anhydride, maleimide, vinyl ethers and vinyl esters.

The sulfated alcohol group-containing thermoplastic polymer is preferably derived from polymers selected from the group consisting of polyadducts of glycidyl compounds having on an average more than one epoxy group with a diol; homopolymers of hydroxyalkyl acrylates or methacrylates or copolymers thereof, homopolymers of butadiene, isoprene and chloroprene whose double bonds are hydroxylated or copolymers thereof; polyimides of hydrogenated ketotetracarboxylic acids, especially of benzophenonetetracarboxylic acid; hydroxyalkyl polysiloxanes; and polyesters, polyamides, polyurethanes and polyimides from C₄-C₁₂alkenylenediols or C₄-C₁₂alkenylenediamines whose double bonds are hydroxylated.

The thermoplastic polymer may be, for example, an at least partially sulfated polyadduct of (a) a glycidyl compound which contains on an average more than one epoxy group; and (b) a diol containing the following group 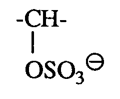
in the polymer chain.

The polyadduct is preferably derived from glycidyl compounds having on an average two epoxy groups in the molecule.

Particularly suitable glycidyl compounds are those containing two glycidyl, β-methylglycidyl or 2,3-epoxycyclopentyl groups attached to a hetero atom (for example, a sulfur atom, preferably an oxygen or nitrogen atom). Such compounds are in particular bis(2,3-epoxycyclopentyl) ethers; diglycidyl ethers of polyhydric aliphatic alcohols such as 1,4-butanediol or of polyalkylene glycols such as 1,4-butanediol or of polyalkylene glycols such as polypropylene glycols; diglycidyl ethers of cycloaliphatic polyols such as 2,2-bis(4-hydroxycyclohexyl)propane; diglycidyl ethers of polyhydric phenols such as resorcinol, bis(hydroxyphenyl)methane, 2,2-bis(p-hydroxyphenyl)propane (diomethane), 2,2-bis(4-hydroxy-3',5'-dibromophenyl)propane, 1,2-bis(p-hydroxyphenyl)ethane ; bis(β-methylglycidyl) ethers of the above-mentioned dihydric alcohols or dihydric phenols, diglycidyl esters of dicarboxylic acids such as phthalic acid, terephthalic acid, Δ⁴-tetra-hydrophthalic acid and hexa-hydrophthalic acid; N,N-diglycidyl derivatives of primary amines and amides and of heterocyclic nitrogen bases containing two nitrogen atoms and N,N'-diglycidyl derivatives of di-secondary diamides and diamines such as N,N-diglycidylaniline, N,N-diglycidyltoluidine, N,N-diglycidyl-p-amino-phenylmethyl ether and N,N'-dimethyl-N,N'-diglycidyl-bis(p-aminophenyl)methane; N',N''-diglycidyl-N-phenylisocyanurate; N,N'-diglycidylethyleneurea, N,N'-diglycidyl-5,6-dimethylhydantoin, N,N'-diglycidyl-5,5-dimethylhydantoin), 1,3-bis(N-glycidyl-5,5-dimethylhydantoin)-2-hydroxypropane, N,N'-diglycidyl-5,5-dimethyl-6-isopropyl-5,6-dihydrouracyl.

The glycidyl compounds can be reacted with aliphatic, cycloaliphatic or aromatic diols to the preferred polyadducts. In this reaction, a secondary alcohol group is formed at the glycidyl group, which can be sulfated.

The glycidyl compounds can also be reacted with primary aliphatic, cycloaliphatic or aromatic monoamines (for example, aniline, toluidine, C₁-C₁₂alkylamines and C₂-C₁₂hydroxyalkylamines); aliphatic, cycloaliphatic or aromatic dicarboxylic acids (for example, maleic acid, adipic acid, trimethyladipic acid, sebacic acid, azelaic acid, succinic acid, dodecylsuccinic acid, phthalic acid, terephthalic acid, Δ⁴-tetrahydrophthalic acid, hexahydrophthalic acid, 4-methyl-hexahydrophthalic acid, 3,6-endomethylene-Δ⁴-tetrahydrophthalic acid and 4-methyl-3,6-endomethylene-Δ⁴-tetrahydrophthalic acid); or with aliphatic, cycloaliphatic, heterocyclic or aromatic di-secondary amines or di-secondary carboxamides, for example, N,N'-dimethylethylenediamine, N,N'-dimethylpropylene- 1,3-diamine, N,N'-dimethylhexamethylenediamine, N,N'-dicyclohexylhexamethylenediamine, N,N',N''-trimethyldiethylenetriamine, N,N'-diethylpropylene-1,3-diamine and N-Methy-3,5,5-trimethyl-3-(methylamino-methyl)cyclohexylamine, an N,N'-dimethylated or N,N'-diethylated aromatic diamine (for example, m- or p-phenylenediamine, bis(4-aminophenyl)methane or -sulfone, 2,2-bis(4-aminophenyl)propane and N,N-dimethyl-m-xylylenediamine); as well as ethyleneurea, 5,5-dimethylhydantoin, 5-isopropylhydantoin, N,N-methylene-bis-5,5-dimethylhydantoin, 1,3-bis-(5,5-dimethyl)-2-hydroxypropane or 5,5-dimethyl-6-isopropyl-5,6-dihydrouracyl), by polyaddition to give linear polyadducts.

A complex to be suitably employed according to this invention is one in which the polyadduct contains:
(a) 100 to 5 mol % of identical or different structural units of the formula (I): 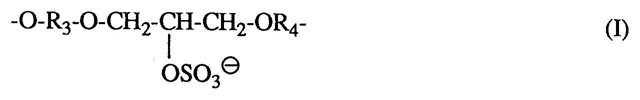 wherein R₃ and R₄ each and independently represent a radical of an aliphatic or aromatic diol group which radical is diminished by two hydroxyl groups; and
(b) 95 to 0 mol % of identical or different structural units of the formula (II): 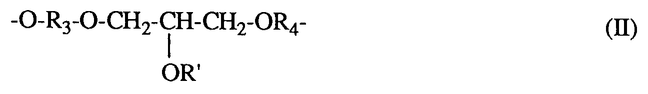 wherein R₃ and R₄ have the same meanings as defined above; R' represents hydrogen, C₁-C₂₀alkyl, C₁-C₂₀acyl, or aminocarbonyl which is N-substituted with C₁-C₂₀hydrocarbon group,
   based on the polyadduct.

Suitable polyadducts contain 90 to 20 mol %, preferably 80 to 30 mol %, of the structural units of the formula (I) and 80 to 10 mol %, preferably 70 to 20 mol %, of the structural units of the formula (II).

In a preferred embodiment of the invention, R₃ and R₄ are identical groups. R₃ and R₄ derived from aliphatic diols may preferably have 2 to 12, most preferably 2 to 8 carbon atoms. The hydroxyl groups may be attached to open-chain or cycloaliphatic group. Suitable aliphatic group is typically a linear or branched C₂-C₁₂alkylene, C₃-C₈cycloalkylene, C₁-C₄alkyl-substituted C₆-C₈cycloalkyl, cyclohexylmethylene or cyclohexyldimethylene.

The above groups can specifically be exemplified by ethylene, 1,2- or 1,3-propylene, 1,2-, 1,3- or 1,4-butylene, 1,2-, 1,3-, 1,4- or 1,5-pentylene, 1,2-, 1,3-, 1,4-, 1,5- or 1,6-hexylene, heptylene, octylene, nonylene, decylene, undecylene, dodecylene, 1,3-cyclopentylene, 1,3- or 1,4-cyclohexylene, 2-methyl-1,4-cyclohexylene and cyclohexyl-1,4-dimethylene.

R' as C₁-C₂₀alkyl may be linear or branched. R' as acyl may be C₁-C₂₀alkyl-CO-, C₃-C₈-cycloalkyl-CO-, C₁-C₁₆alkyl-substituted C₃-C₈cycloalkyl-CO-, C₃-C₈cycloalkyl-CH₂-CO-, C₁-C₁₄alkyl-substituted C₃-C₈cycloalkyl-CH₂-CO-, phenyl-CO, benzyl-CO-, C₁-C₁₄alkyl-substituted phenyl-CO- or C₁-C₁₄alkyl-substituted benzyl-CO. The hydrocarbon group in the aminocarbonyl may be C₁-C₂₀alkyl-, C₃-C₈cycloalkyl-, C₁-C₁₆alkyl-substituted C₃-C₈cycloalkyl-, C₃-C₈cycloalkyl-CH₂-, C₁-C₁₄alkyl-substituted C₃-C₈-cycloalkyl-CH₂-, phenyl, benzyl, C₁-C₁₄alkyl-substituted phenyl or C₁-C₁₄alkyl-substituted benzyl. R' is preferably hydrogen.

The aromatic diols used for the polyadducts are preferably phenolic groups. The diol groups having phenolic groups preferably contain 6 to 30, most preferably 6 to 20, carbon atoms. In a preferred embodiment of the invention, R₃ and R₄ each and independently has a group represented by the formula (III): 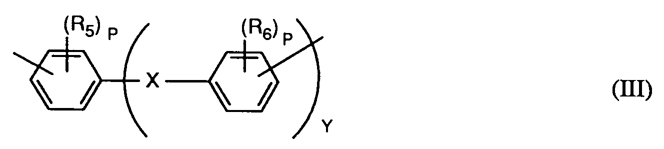
wherein X is a direct bond, C₁-C₄alkylene, C₂-C₁₂alkylidene, C₅-C₈cycloalkylidene, -O-, -S-, -SO-, -SO₂-, -CO-, -CO₂-, -N(C₁-C₄alkyl)- or -Si(CH₃)₂-; R₅ and R₆ each and independently represent hydrogen, halogen, C₁-C₄alkyl or C₁-C₄alkoxy; p is 1 or 2; and y is 0 or 1.

X preferaby represents a direct bond, methylene, ethylene, C₂-C₈alkylidene, cyclohexylidene, cyclopentylidene, -O- or -S-; R₅ and R₆ each preferably represent hydrogen or methyl; and y is preferably 1.

R₃ and R₄ each preferably represent a group of the formula:

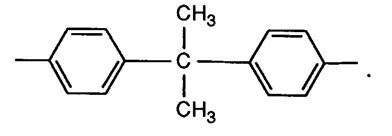

In a complex to be suitably employed according to this invention, the thermoplastic polymer is an at least partially sulfated homopolymer or copolymer of an acrylate or methacrylate containing a group of the formula: 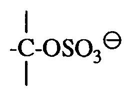
in the ester moiety. A preferred complex of this type is one in which the thermoplastic polymer contains:
(a) 100 to 5 mol % of identical or different structural units of the formula (IV): 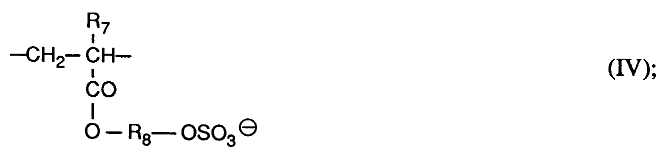 and
(b) 95 to 0 mol % of identical or different structural units of the formula (V): 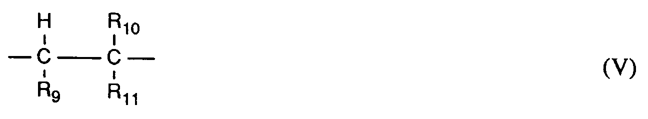 based on the polymer.

In the formulae (IV) and (V), R₇ represents hydrogen or methyl; R₈ represents linear or branched C₂-C₁₈alkylene, poly(C₂-C₈oxaalkylene) containing 2 to 6 oxaalkylene units, C₃-C₈cycloalkylene, phenylene, benzylene or xylylene; or a group of the formula: 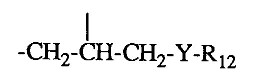
wherein Y represents -O-, -OCO- or -N(C₁₋C₄alkyl)-; R₁₂ represents C₁-C₁₈alkyl, C₅-C₇cycloalkyl, C₁-C₁₂alkyl-substituted C₅-C₇cycloalkyl, phenyl, C₁-C₁₂alkyl-substituted phenyl, benzyl or C₁-C₁₂alkyl-substituted benzyl; R₉ represents hydrogen, C₁-C₈alkyl, -COOR₁₂ or -COO-; R₁₀ represents hydrogen, fluorine, chlorine, cyano or C₁-C₆alkyl; R₁₁ represents hydrogen, fluorine, chlorine, cyano, R₁₂O-, C₁-C₁₂alkyl, -COO-, -COOR₁₂, -COOR₈-OH, -OCO-R₁₂ or phenyl (R₈ and R₁₂ have the same meanings as defined above).

The thermoplastic polymer preferably contains 90 to 20 mol %, most preferably 80 to 30 mol % of the structural unit of the formula (IV), and also 80 to 10 mol %, most preferably 70 to 20 mol %, of the structural unit of the formula (V).

R₈ as alkylene preferably has 2 to 12, more preferably 2 to 8, and most preferably 2 to 6 carbon atoms. R₈ as alkylene typically includes isomers of ethylene, propylene, butylene, pentylene, hexylene, heptylene, octylene, nonylene, decylene, undecylene, dodecylene, tetradecylene, hexadecylene and octadecylene, preferably 1,2-ethylene, 1,3-propylene, 1,2-, 1,3- and 1,4-butylene, 1,2-, 1,3-, 1,4- and 1,5-pentylene and 1,2-, 1,3-, 1,4-, 1,5- and 1,6-hexylene.

R₈ as poly(oxaalkylene) preferably has 2 to 4 oxaalkylene units and 2 to 4, more preferably 2 or 3 carbon atoms in the alkylene moiety.

R₈ as cycloalkylene preferably is cyclopentylene or cyclohexylene.

Polymers in which R₈ represents a group of the formula: 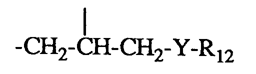
are reaction products of glycidyl esters of poly- or copoly(meth)acrylic acid with a compound R₁₂-Y-H containing active hydrogen.

Y preferably represents -O- or -OCO-. R₁₂ may be linear or branched alkyl having 1 to 18, preferably 1 to 12, and most preferably 1 to 6 carbon atoms.

R₁₂ as cycloalkyl preferably is cyclopentyl or cyclohexyl. Where R₁₂ is C₁-C₁₂-alkyl-substituted cycloalkyl, the cycloalkyl moiety is preferably cyclopentyl or cyclohexyl, and the alkyl moiety may be linear or branched and preferably has 1 to 6, and most preferably 1 to 4 carbon atoms. Where R₁₂ is alkyl-substituted phenyl or alkyl-substituted benzyl, the alkyl moiety may be linear or branched and has preferably 1 to 6, and most preferably 1 to 4 carbon atoms.

R₉ is preferably hydrogen. R₉ as alkyl preferably is methyl or ethyl. Where R₉ is -COOR₁₂, R₁₂ is preferably C₁-C₁₈alkyl, and most preferably C₁-C₈alkyl.

R₁₀ as alkyl is preferably C₁-C₄alkyl, typically methyl, ethyl, n-propyl or n-butyl. R₁₀ is preferably hydrogen, chlorine or C₁-C₄alkyl.

Where R₁₁ is the group R₁₂O-, R₁₂ is preferably C₁-C₁₂alkyl, more preferably C₁-C₈alkyl.

R₁₁ as alkyl preferably has 1 to 6, and most preferably 1 to 4, carbon atoms. Where R₁₁ is the group -COOR₁₂, R₁₂ is preferably C₁-C₁₂alkyl, and nost preferably C₁-C₈alkyl, cyclopentyl or cyclohexyl. Where R₁₁ is -OCO-R₁₂, R₁₂ is preferably C₁-C₁₂alkyl, and most preferably C₁-C₈alkyl, phenyl or benzyl.

Where R₁₁ represents the group -COOR₈-OH, R₈ has the same meaning as defined above.

In a preferred embodiment of the invention, R₉ is hydrogen, fluorine, chlorine, methyl or ethyl; and R₁₁ is fluorine, chlorine, cyano, C₁-C₄alkyl, C₁-C₈alkoxy, -COO-C₁-C₈alkyl, -COO-R₈-OH, -OCO-C₁-C₈alkyl or phenyl.

Particularly preferred complex is one wherein, the thermoplastic polymer has the structural units of the formula (IV) (wherein R₇ represents hydrogen or methyl; and R₈ represents linear or branched C₂-C₆alkylene, cyclopentylene or cyclohexylene) and the structural units of the formula (V) (wherein R₉ represents hydrogen; R₁₀ represents hydrogen or methyl; and R₁₁ represents -COOR₁₂ or -COOR₈-OH).

In another preferred embodiment of the invention, the thermoplastic polymer contains:
(a) identical or different structural units of the formula (VI): 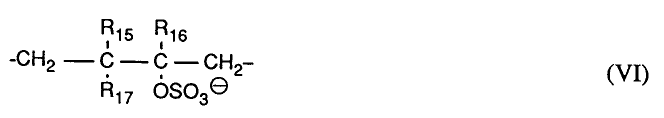 wherein R₁₅, R₁₆ and R₁₇ each and independently represent hydrogen, C₁-C₂₀alkyl or halogen;
(b) identical or different structural units of the formula (VII) 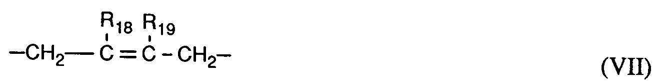 wherein R₁₈ and R₁₉ each and independently represent hydrogen, C₁-C₂₀alkyl or halogen; and
(c) identical or different structural units of the formula (VII): 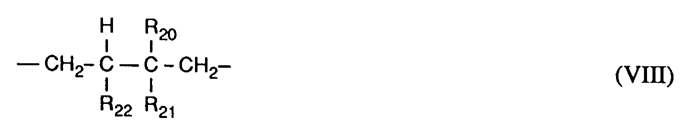 wherein R₂₀ represents hydrogen, fluorine, chlorine, cyano or C₁-C₈alkyl; R₂₁ represents hydrogen, fluorine, chlorine, cyano, R₁₂O-, C₁-C₁₂alkyl, -COO-, -COOR₁₂, -COOR₈-OH, -OCO-R₁₂ or phenyl; and R₂₂ represents hydrogen, C₁-C₈alkyl, -COOR₁₂ or -COO- (wherein R₈ and R₁₂ have the same meanings as defined above).

In a further preferred embodiment of the invention relates to a complex in which the thermoplastic polymer is an at least partially sulfated polyvinyl alcohol or a copolymer thereof containing the group: 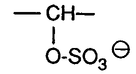
in the polymer chain. Preferably, the complex contains a polyvinyl alcohol copolymer.

A preferred complex contains:
(a) 90 to 5 mol % of the structural units of the formula (VI): 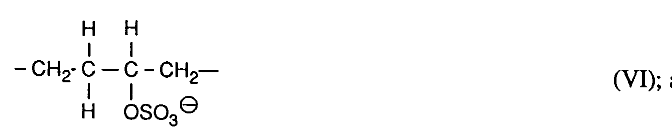 and
(b) 95 to 10 mol % of identical or different structural units of the formula (V): 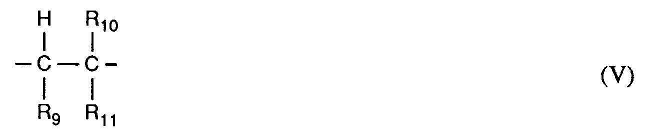 wherein R₉, R₁₀ and R₁₁ have the same meanings as defined above.

Preferably, the copolymer contains 70 to 10 mol %, most preferably 60 to 20 mol % of the structural units of the formula (VI), and 30 to 90 mol %, most preferably 40 to 80 mol % of the structural units of the formula (V).

In a particularly preferred complex, R₉ and R₁₀ each represent hydrogen; and R₁₁ represents -OCOR₁₂ (wherein R₁₂ represents C₁-C₁₈alkyl, C₃-C₇cycloalkyl, C₁-C₁₈-alkyl-substituted C₃-C₇cycloalkyl, phenyl, benzyl, C₁-C₁₈alkyl-substituted phenyl or C₁-C₁₂alkyl-substituted benzyl).

The thermoplastic polyanion to be employed according to this invention can be derived from polymer salts which is known or can be prepared according to methods known per se. These salts are thermoplastic polymers having film-forming properties, which contains in the repeating structural units the sulfated alcohol group represented by the formula: 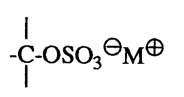
wherein M^{⊕} represents an alkali metal cation or an ammonium cation.

The sulfated alcohol group may be present at the terminal end position of the polymer back bone in the form of: 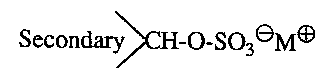
wherein M^{⊕} has the same meaning as defined above; or at the side chain in the form of primary-CH₂-O-SO₃^{⊖}M^{⊕}, wherein M^{⊕} has the same meaning as defined above, or at a center position of the side chain in the form of: 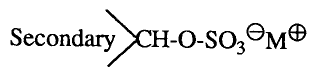
wherein M^{⊕} has the same meaning as defined above, or in the form of 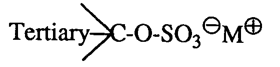
wherein M^{⊕} has the same meaning as defined above.

The polymer has a glass transition temperature of -100 to 350°C, more preferably -50 to 250°C as measured by DSC. The polymer preferably has a tensile strength of 5 MPa or more, most preferably 10 MPa or more as measured in accordance with DIN 53455. The polymer may have a higher tensile strength of up to 1,000 MPa, preferably up to 500 MPa, most preferably up to 300 MPa, depending on the nature of the polymer.

The polymerization degree of the thermoplastic polymer may be, for example, 5 to 10,000, preferably 10 to 5,000, and most preferably 10 to 1,000.

In a preferred thermoplastic polymer, the ratio of the free alcohol group to the sulfated alcohol group in the polymer is, for example, 50:1 to 1:50, preferably 10:1 to 1:10.

The ammonium cation may be NH₄^{⊖}, a protonated primary, secondary or tertiary amine, or quaternary ammonium or pyridinium. The primary amine may contain 1 to 18, preferably 1 to 12, and most preferably 1 to 6 carbon atoms; the secondary amine may contain 2 to 24, preferably 2 to 12, and most preferably 2 to 8 carbon atoms; the tertiary amine may contain 3 to 30, preferably 3 to 18, and most preferably 3 to 12 carbon atoms; and the quaternary ammonium may contain 4 to 36, preferably 4 to 24, and most preferably 4 to 18 carbon atoms.

Preferred thermoplastic polymers are those wherein M^{⊕} is Li^{⊕}, Na^{⊕} or K^{⊕}, or a group of the formula: 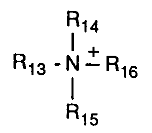
wherein R₁₃, R₁₄, R₁₅ and R₁₆ each and independently represent hydrogen, unsubstituted or hydroxyl-substituted C₁-C₁₈alkyl, phenyl, C₁-C₁₂alkyl-substituted phenyl, C₁-C₁₈-alkyl-substituted benzyl, C₅-C₇cycloalkyl, C₁-C₁₂alkyl-substituted C₅-C₇cycloalkyl; or R₁₃ and R₁₄ may be combined and together represent tetramethylene, pentamethylene or 3-oxypentylene,and R₁₅ and R₁₆ have the same meanings as defined above.

A preferred embodiment of this invention relates to polymers in which at least one of R₁₃ to R1₆ is not hydrogen.

R₁₃ to R₁₆ as alkyl may be linear or branched and preferably have 1 to 12, and most preferably 1 to 6 carbon atoms. Such groups may typically be exemplified by methyl, ethyl, n- and isopropyl, n-butyl, isobutyl and tert-butyl, pentyl, hexyl, heptyl, octyl, nonyl, decyl, dodecyl, tetradecyl, hexadecyl and octadecyl.

R₁₃ to R₁₆ as hydroxyalkyl may be linear or branched and preferably contains 2 to 18, particularly 1 to 12, and most preferably 2 to 6 carbon atoms. Such groups may typically be exemplified by 2-hydroxyethyl, 1- or 2-hydroxypropyl, 1-hydroxybutyl and 1-hydroxyhexyl.

The alkyl-substituted phenyl and alkyl-substituted benzyl can be exemplified by methylphenyl, dimethylphenyl, ethylphenyl, n- or isopropylphenyl, n-, iso- or tert-butylphenyl, hexylphenyl, octylphenyl, decylphenyl, dodecylphenyl and suitably alkyl-substituted benzyl.

R₁₃ to R₁₆ as cycloalkyl are preferably cyclopentyl or cyclohexyl.

R₁₃ to R₁₆ as alkylcycloalkyl each are preferably C₁-C₁₂alkyl-substituted cyclopentyl or C₁-C₁₂alkyl-substituted cyclohexyl.

Most preferably, R₁₃ to R₁₆ each represent C₁-C₆alkyl.

The sulfated alcohol group-containing thermoplastic polymers which can suitably be used according to this invention may be prepared by a known method by reacting a thermoplastic polymer having film-forming properties and containing an alcohol group in the repeating structural unit thereof with SO₃ in an inert solvent, and neutralizing the reaction mixture with an alkali metal base or an ammonium base, followed by isolation of the polymer.

The above method is known per se. For example, SO₃ can be introduced in the gaseous form into the reaction mixture. It is advantageous to use a commercially available pyridine/SO₃ complex.

Suitable inert solvents are preferably polar aprotic solvents. A suitable solvent is selected depending mainly on the solubility of the hydroxyl group-containing polymer. The solvent may be used singly or as a mixture of at least two solvents. Suitable solvents may typically be exemplified by ethers such as dibutyl ether, tetrahydrofuran, dioxane, methylene glycol, dimethyl ethylene glycol, dimethyl dimethylene glycol, diethyl diethylene glycol and dimethyl triethylene glycol; halogenated hydrocarbons such as methylene chloride, chloroform, 1,2-dichloroethane, 1,1,1 -trichloroethane and 1,1,2,2-tetrachloroethane; and lactones such as γ-butyrolactone, o-valerolactone and pivalolactone; carboxamides and lactams, for example, N,N-dimethylformamide, N,N-diethylformamide, N,N-dimethylacetamide, N-methyl-γ-butyrolactam, N-methyl-εcaprolactam , N-methylpyrrolidone, N-acetylpyrrolidone, tetramethylurea and hexamethylphosphoramide; sulfoxides such as dimethyl sulfoxide; sulfones such as dimethyl sulfone, diethyl sulfone, trimethyl sulfone and tetramethylene sulfone; N-methylpyrrolidine, N-methylpiperidine and N-methylmorpholine; and substituted benzenes such as benzonitrile, chlorobenzene, o-dichlorobenzene, 1,2,4-trichlorobenzene and nitrobenzene.

The reaction temperature is, for example, in the range of 20 to 150°C, preferably 40 to 100°C. The reaction time is about 5 to 10 hours. After completion of the reaction, the reaction mixture is neutralized with an alkali metal base or ammnium hydroxide when a gaseous SO₃ is used, or with an aqueous or organic solution of an amine hydroxide. When an amine/SO₃ complex, for example, a pyridine/SO₃ complex is used, the corresponding ammonium salt is formed. The thus obtained ammonium salt can directly be used in the electrochemical process. It is also possible to replace the ammonium groups in the salts by stronger bases. The salts of the sulfated polymers are usually precipitated with water. The polymer is then isolated by filtration, and can be purified by washing with water or an organic non-solvent, followed by drying.

The polyolefins can also be prepared, for example, by radical polymerization of acrylates or methacrylates containing -O-SO₃M in the ester moiety without or together with olefin comonomers.

Suitable salts of the sulfated alcohol group-containing polymers also hav thermoplasticity. Compared with the starting polymers, their glass transition temperature is substantially unchanged, and the salts can be distinguished from the starting polymers by the mechanical properties such as the higher tensile and flexual strength, as well as, high flexibility. These salts are polyanions which are very suitable for the electrically conductive polycations of polyheteroaromatic compounds.

The electrically conductive polymer complex to be used according to this invention can be prepared in a manner known per se by subjecting a polyheteroaromatic compound, aniline or an aniline derivative to electrochemical polymerization in an aqueous, aqueous-organic or organic solvent in the presence of a salt of a sulfated alcohol group-containing polymer, followed by separation of the complex from the anode. The complex is normally deposited in the form of film which, depending on the duration of electrochemical polymerization and current density, may have a thickness of, for example, 1 to 500 µm, preferably 10 to 300 µm.

The electrochemical polymerization can be carried out potentiostatically or glavanostatically. Suitable anode materials are, for example, metals such as titanium, nickel, platinum and steel, or ITO glass. The current density can be, for example, from 0.5 to 20 mA/cm², preferably from 1 to 5 mA/cm².

The electrochemical polymerization can also be carried out in water or in an aqueous-organic solvent. The concurrent use of buffers is expedient. Suitable buffers are typically alkylammonium phosphates having 1 to 3, preferably 2 or 3 alkyl groups in the ammonium moiety, which alkyl group may contain 1 to 6, preferably 1 to 4 carbon atoms. Suitable buffers typically include, for example, trimethylammonium phosphate, triethylammonium phosphate, tri-n-propylammonium phosphate and tri-n-butyl-ammonium phosphate. Protonated form of cation exchangers are also preferred.

It is also possible to add to the reaction mixture further substances which deposit concurrently on the anode, for example, anionic plasticizers or anionic dyes.

After completion of the electrochemical polymerization, the resulting complex can be separated or peeled of from the anode in the form of film and purified by washing with a solvent.

The present complex usually has a high electric conductivity of 0.1 S/cm or more. Further, the complex has valuable mechanical properties such as high toughness, tensile strength, flexual strength and flexibility. The complex has a low glass transition temperature, and therefore it can be subjected to thermoplastic molding without losing its electrical conductivity even at a low polyanion concentration.

The present complex can be processed by methods for thermoplastic polymers, for example, by molding methods, particularly preferably drawing methods (deep drawing) at a temperature of not higher than the melting and decomposition temperatures within the range of the glass transition temperature.

Electric conductivity can notably be increased by the drawing depending on the orientation direction. In the case of, for example, a complex subjected to 200 % drawing, the electric conductivity of the complex can be increased to 5 times as much as that of the undrawn complex.

When a complex according to this invention is produced by chemical oxidation polymerization method, for example, a mixture of an oxidizing agent and polyanion is applied onto an appropriate support and then exposed to the monomer vapor of polyheteroaromatic compound, aniline or aniline derivative under reduced pressure to obtain an electrically conductive organic polymer film; or after an oxidizing agent is applied onto the support, the mixture of a polyanion and the monomer is applied thereon to form an electrically conductive organic polymer film.

As the valve metal to be employed according to this invention, aluminum (Al) or tantalum (Ta) can be used. Of them, those having a purity of 99.99 % or higher are preferred so as to secure predetermined electrical properties. A purity of less than 99.99 % cannot give an oxide film having the desired dielectric constant or tends to affect the physical properties of the dielectric film due to the impurities of unoxidized portions remaining in the oxide film, resulting in the failure of affording a large-capacity capacitor having excellent high-frequency characteristics according to this invention.

While the thickness of the valve metal may not particularly be limited, it is preferably in the range of 1.0 µm to 1.0 mm, more preferably 30 µm to 300 µm. A thickness of less than 1.0 µm is liable to suffer pinholes when an oxide film is formed by chemical conversion treatment, and if a capacitor is produced using such valve metal having phinholes after chemical conversion treatment, current leakage occurs at the pinholes, making it sometimes impossible to give a capacitor having excellen high-frequency characteristics; whereas a thickness of more than 1.0 mm will increase the size of the capacitor as a final product, making it impossible to provide a small capacitor having a large capacity.

According to the process for producing the capacitor of this invention, the valve metal is first subjected to etching so as to achieve surface roughening, and then an oxide layer is formed thereon by electrolytic oxidation or aerobic oxidation to form a dielectric film. The electrolytic oxidation can preferably be carried out, for example, in a 1 to 5 % aqueous diammonium adipic acid solution at a voltage of 25 to 45 V and a temperature of 50 to 100°C.

Subsequently, a film of electrically conductive thermoplastic organic polymer is formed on the resulting dielectric oxide film. If the film of electrically conductive organic polymer is directly formed on the dielectric film by electrolytic polymerization, a wide contact area can be secured between the dielectric film and the electrically conductive polymer, providing a large-capacity capacitor. For such purpose, it is advantageous to impart electric conductivity to the surface of the dielectric film.

Such electric conductivity imparting treatment is carried out by forming a thin film of metal or a metal compound having conductivity by means of vacuum vapor deposition, ion plating or coating, wherein a mixture of two or more metals or metal compounds having electric conductivity can be used. The metals to be used for such treatment can typically be exemplified by aluminum, titanium, cobalt, nickel, copper, zinc, ruthenium, rhodium, palladium, silver, indium, tin, iridium, thallium, tungsten, platinum and gold.

Meanwhile, the metal compounds having electric conductivity to be used for such treatment may not particularly be limited so long as they have electric conductivity and preferably includes, for example, metal oxide such as titanium oxide, vanadium oxide, manganese oxide, ruthenium oxide, rhodium oxide, indium oxide, tin oxide, osmium oxide, iridium oxide, cobalt oxide, nickel oxide, lead oxide and iron oxide.

Film formation using the above metals and metal compounds can be carried out by the following methods in addition to the known methods such as vacuum vapor deposition, ion plating, etc.:
(a) Formation of manganese dioxide film
   The dielectric oxide film is immersed in a 5 to 25 % manganese nitrate solution, and then heated at 150 to 350°C for 5 to 30 minutes to effect thermal decomposition of the manganese nitrate to form a manganese dioxide film on the surface of the dielectric oxide film.
(b) Formation of lead dioxide film
   The dielectric oxide film is immersed in a reaction mother liquid containing lead ion, followed by thermal decomposition at a high temperature of 200 to 300°C (Japanese Patent Publication No. 21414/1983), or by addition of silver ion as a catalyst to effect precipitation chemically (Japanese Patent Publication No. 29374/1974), or by immersion in an aqueous sodium plumbate solution, followed by leaving to stand at 60°C under reduced pressure for 30 hours (Japanese Unexamined Patent Publication No. 126625/1987), to form a lead dioxide film on the dielectric oxide film.
(c) Formation of vanadium trioxide film
   The dielectric oxide film is immersed in an aqueous ammonium metavanadate solution containing sodium boronhydride as a reducing agent, followed by leaving to stand under reduced pressure for 3 hours (Japanese Unexamined Patent Publication No. 126624/1987) to form a vanadium trioxide layer.
(d) Formation of tri-iron tetroxide film
   The dielectric oxide film is immersed in a reaction mother liquid containing iron ion, for example, in an aqueous saturated solution of ferric sulfate adjusted to pH 4.5 by ammonium sulfate, followed by leaving to stand at 100°C for 3 hours (Japanese Unexamined Patent Publication No. 126623/1987) to form a tri-iron tetroxide layer.

Incidentally, the formation of the film of electrically conductive metal compound may not be limited only to those described above, and can resort to any other methods so long as an excellent electrically conductive film can be formed. Said conductive film may also be obtained by the chemical or electrochemical polymerization of a heterocyclic aromatic compound such as pyrrole.

Next, a film of the electrically conductive thermoplastic organic polymer can be formed on the valve metal oxide film in the following manners.
(1) A film of the electrically conductive thermoplastic organic polymer is formed by electrolytic polymerization onto the valve metal dielectric oxide film having electric conductivity imparted according to any of the above processes. The conditions for electrolytic polymerization may be selected within the gist of this invention. Namely, electrolytic polymerization of a monomer of heteroaromatic compound, aniline or aniline derivative is carried out using as the anode the electrically conductive film formed on the dielectric oxide film in the presence of a thermoplastic polyanion within the gist of this invention, whereby a capacitor structure according to this invention comprising valve metal/valve metal dielectric oxide film/electrically conductive thermoplastic organic polymer is produced.
(2) The capacitor structure of this invention comprising valve metal/valve metal dielectric oxide film/electrically conductive thermoplastic organic polymer is established by using the valve metal dielectric oxide film as a support and forming an electrically conductive organic polymer thereon by chemical oxidation polymerization. Namely, the capacitor structure according to this invention is established, for example, by applying a mixture of an oxidizing agent and a polyanion onto the valve metal having a dielectric oxide film, followed by exposure to a pyrrole vapor under reduced pressure to form the electrically conductive polymer film; or by applying an oxidizing agent onto the valve metal having a dielectric oxide film and then a mixture of a polyanion and a pyrrole to form the electrically conductive polymer film.
(3) The electrically conductive polymer film formed electrochemically as described above is heated to a temperature of not lower than the glass transition temperature thereof and then subjected to compression bonding with the valve metal having the dielectric oxide film. While the temperature for such thermo-compression bonding may not particularly be limited so long as it is not lower than the glass transition temperature of the electrically conductive polymer film, it is preferably in the range of between 250°C to the glass transition temperature of the polyanion plus 10°C and below the decomposition temperature of the polyanion. While the pressure for the thermo-compression bonding may not particularly be limited so long as the valve metal having the dielectric oxide film is not deformed, it is preferably in the range of 0.1 to 50 kg/cm², more preferably 1 to 20 kg/cm².

While the time for the thermo-compression bonding may not particularly be limited so long as the polymer film can fully be bonded onto the surface of the valve metal, it is about 1 to 30 minutes in view of cost and working efficiency, and preferably about 1 to 15 minutes. A plasma treatment of the surface of the electrically conductive polymer formed according to this invention can improve adhesion with the valve metal. Meanwhile, so as to increase capacity of the capacitor, an electrically conductive polymer film may preliminarily be formed by chemical oxidation polymerization onto the surface of the valve metal having the dielectric oxide film before subjected to thermo-compression bonding.

The above process (1) is particularly preferred for producing large-capacity capacitors; while the processes (2) and (3) are particularly preferred for readily producing capacitors having excellent high-frequency characteristics.

This invention will now be described in more detail by way of Examples.

### Example 1

### Synthesis of Polyanion

To 150 ml of dimethylformamide (DMF) is dissolved 28.4 g of a polyadduct (polymerization degree: ca. 100) of bis-phenol A diglycidyl ether and bisphenol A at 50°C. To the resulting solution is added a solution of a pyridine/SO₃ complex (4.4 g) in DMF (20 ml) to effect reaction. The reaction mixture is cooled to 5°C after 5 hours, and then 8.7 ml of tributylamine is added thereto.

Subsequently water is added to the reaction mixture, and the polymer salt thus precipitated is filtered out, washed with water and dried under high vacuum condition to give 45 g of tributylammonium salt of the sulfated polyadduct of bisphenol A diglycidyl ether and bisphenol A represented by the following formula:

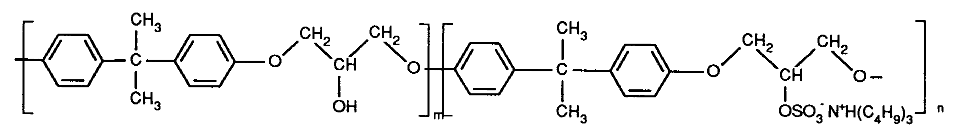

The molar ratio (MR) of the sulfated alcohol groups in the polyanion structural unit to the repeating structural units is 0.25.

### Production of Electrolytic Capacitor

An etched aluminum foil (20 mm x 20 mm; thickness: 90 µm) is used as an anode, which is subjected to a chemical conversion treatment in a 3 % aqueous adipic acid diammonium solution at 35 V and 80°C to form a dielectric oxide film of aluminum oxide on the surface of the foil. The resulting aluminum foil is immersed in a 10 % manganese nitrate solution and then subjected to thermal decomposition at 250°C for 10 minutes to form a manganese dioxide layer on the surface of the foil.

Subsequently, a galvanostatic electrolysis is carried out at a current density of 0.5 mA/cm² for 120 minutes using the aluminum foil having the manganese dioxide layer as an anode, a patinum plate as a cathode and a propylene carbonate solution containing 0.05 M of polyanion, 5 % of pyrrole and 1 % of water as an electrolyte to form a thin film of polypyrrole uniformly on the surface of the aluminum foil.

The resulting foil is washed with ethanol and dried at 50°C, and then a carbon paste and a silver paste are applied thereon to form a counter electrode. After a counter electrode lead is attached, the resulting product is sealed in an epoxy resin to provide a capacitor.

The thus obtained capacitor had a conductance at 120 Hz of 20 µF/cm² and tangent of loss angle (tan δ) of 2.0 %.

### Example 2

A galvanostatic electrolysis is carried out at a current density of 2.0 mA/cm² for 60 minutes using stainless steel plates as the anode and cathode and the same electrolyte as used in Example 1. A black film formed on the anode is peeled off, washed with ethanol and dried at 50°C to obtain a polypyrrole film having a thickness of 100 µm.

The thus obtained polypyrrole film has an electric conductivity of 12 S/cm, a glass transition temperature of 110°C, a breaking strength (room temperature) of 76 MPa and elongation at break at room temperature of 42 % and at 100°C of 137 %.

Next, the above polypyrrole film (12 mm x 12 mm) is laminated onto an etched aluminum foil (10 mm x 25 mm; thickness: 90 µm) subjected to a chemical conversion treatment in the same manner as in Example 1 by thermocompression bonding using a heat press at 150°C for 5 minutes to provide a capacitor in the same manner as in Example 1. The thus obtained capacitor has a capacitance at 120 Hz of 0.4 µF/cm² and a tangent of loss angle (tan δ) of 1.5 %.

### Example 3

After an etched aluminum foil (10 mm x 25 mm; thickness: 90 µm) subjected to a chemical conversion treatment in the same manner as in Example 1 is immersed in a 10 % aqueous ammonium persulfate solution to effect corrosion, the thus treated aluminum foil is exposed to a pyrrole vapor under reduced pressure to form a polypyrrole film by chemical oxidation polymerization on the surface of the aluminum foil. Subsequently, the same polypyrrole film (12 mm x 12 mm) as used in Example 2 is laminated onto the resulting aluminum foil in the same manner as in Example 2 to provide a capacitor. The thus obtained capacitor has a capacitance at 120 Hz of 4.2 µF/cm² and a tangent of loss angle (tan δ) of 1.5 %.

### Example 4

The same polypyrrole film (10 mm x 10 mm) as used in Example 2 is laminated onto a smooth aluminum foil (20 mm x 20 mm; thickness: 40 µm) subjected to a chemical conversion treatment in the same manner as in Example 1 to provide a capacitor in the same manner as in Example 2. The thus obtained capacitor has a capacitance at 120 Hz of 3.9 µF/cm² and a tangent of loss angle (tan δ) of 1.7 %.

### Example 5

### Synthesis of Polyanion

To 400 ml of 1,4-dioxane is dissolved 37.3 g of a styrene butadiene copolymer (styrene content: 24 %). To the resulting solution is added slowly a solution of 3-chloro-benzoic acid (24.7 g) in 4-dioxane (60 ml) under ice cooling, followed by stirring for 17 hours.

After addition of 30 ml of conc. hydrochloric acid to the mixture, the resulting mixture is heated to 80°C and stirred for 4 hours, and after the mixture is cooled to room temperature, the mixture is further stirred for 17 hours. The resulting reaction mixture is added dropwise to methanol, and the polymer compound thus precipitated is washed many times with methanol and dried at 40°C under a high vacuum condition.

Substequently, the dried polymer (12.5 g) is dissolved in a mixed solvent of dry DMF/1,4-dioxane = 100 ml:40 ml, and then 7.0 g of a pyridine-SO₃ complex is added thereto to effect reaction for 5 hours. The reaction mixture is cooled to 10°C and neutralized with 9.4 ml of tributylamine, and then the mixture is added to water. After the polymer salt thus precipitated is filtered off, and washed five times with water and then dried under high vacuum condition to give 16.9 g of a sulfated product of styrene/ butadiene copolymer having hydroxylated at the double bond represented by the following formula:

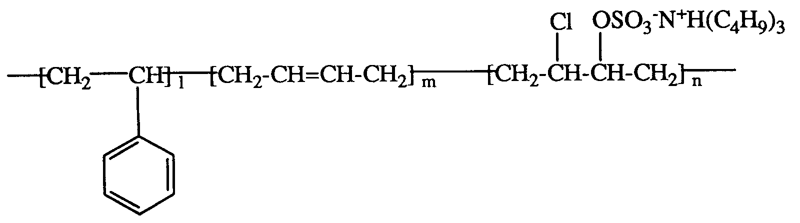

The molar ratio (MR) of the sulfated alcohol groups in the polyanion structural unit to the repeating structural units is 0.20.

### Production of Electrolytic Capacitor

A black polypyrrole film is formed on the anode in the same manner as in Example 1, except that the polyanion prepared above is used. The thus obtained polypyrrole film has a thickness of 106 µm, an electric conductivity of 23.7 S/cm, a breaking strength at room temperature of 72 MPa, and an elongation at break of 106 %. The polypyrrole film subjected to 170 % drawing at 100°C shows an increased electric conductivity of 72 S/cm.

Subsequently, after the resulting black film is subjected to surface modification with oxygen plasma, a 10 mm x 10 mm piece is cut out of the film, which is laminated onto a smooth aluminum foil (20 mm x 20 mm; thickness: 40 µm) subjected to chemical conversion treatment in the same manner as in Example 2 to produce a capacitor in the same manner as in Example 1. The thus obtained capacitor has a conductance at 120 Hz of 80 µF/cm² and tangent of loses angle (tan δ) of 2.0 %.

### Comparative Example 1

A black film is formed in the same manner as in Example 2, except that tributyl ammonium salt of toluenesulfonic acid is used as the anion. The thus obtained polypyrrole film has a thickness of 40 µm, an electric conductivity of 80 S/cm, a breaking strength at room temperature of 80 MPa, and an elongation at break of 40 %.

Subsequently, a 10 mm x 10 mm piece is cut out of the resulting polypyrrole film so as to carry out lamination onto a smooth aluminum foil (20 mm x 20 mm; thickness 40 µm) subjected to a chemical conversion treatment in the same manner as in Example 2, but the polypyrrole film delaminates from the aluminum foil, resulting in the failure of producing a capacitor.

### Comparative Example 2

After the same polypyrrole film as used in Comparative Example 1 is subjected to surface modification with oxygen plasma, a 10 mm x 10 mm piece is cut out of the film, which is laminated onto a smooth aluminum foil (20 mm x 20 mm; thickness: 40 µm) subjected to chemical conversion treatment in the same manner as in Example 2, but the polypyrrole film is delaminated from the aluminum foil, resilting in the failure of producing a capacitor.

The solid electrolytic capacitor according to this invention is small but has a large capacity and excellent high-frequency characteristics and long-term stability, since the electrically conductive thermoplastic organic polymer employed as a solid electrolyte has a high electric conductivity. Moreover, since the solid electrolyte has thermoplasticity, physical properties of the solid electrolyte are not deteriorated, for example, when it is subjected to thermo-compression bonding onto the valve metal oxide film, and capacitors can be produced by simple procedures economically.

## Claims

1. A solid electrolytic capacitor having a solid electrolyte layer, which layer comprises an electrically conductive thermoplastic organic polymer complex having an electric conductivity of 0.1 Scm⁻¹ or more and a glass transition temperature of -100 to 150°C formed on a valve metal foil through a dielectric film.

2. A solid electrolytic capacitor according to Claim 1, wherein said valve metal is tantalum or aluminum.

3. A solid electrolytic capacitor according to Claim 1, wherein said electrically conductive thermoplastic organic polymer complex is prepared by subjecting a heteroaromatic compound, aniline or an aniline derivative to polymerization in the presence of a thermoplastic polyanion.

4. A solid electrolytic capacitor according to Claim 3, wherein said thermoplastic polyanion is of a carboxyl, sulfonic, phosphonic or sulfated alcohol group-containing thermoplastic polymer having a glass transition temperature of -100 to 250°C.

5. A solid electrolytic capacitor according to Claim 3, wherein said thermoplastic polyanion has the structural unit represented by the formula

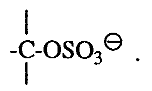

6. A solid electrolytic capacitor according to Claim 3, wherein said thermoplastic polyanion contains
(a) 100 to 5 mol % of identical or different structural units of the formula (I): 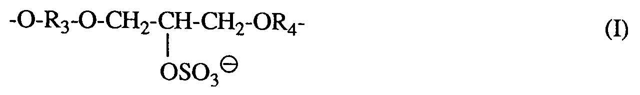 wherein R₃ and R₄ each and independently represent a radical of an aliphatic or aromatic diol group which radical is diminished by two hydroxyl groups; and
(b) 95 to 0 mol % of identical or different structural units of the formula (II): 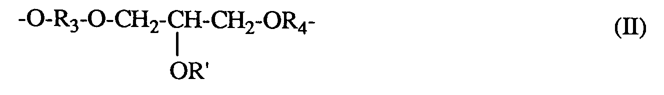 wherein R₃ and R₄ have the same meanings as defined above; R' represents hydrogen, C₁-C₂₀alkyl, C₁-C₂₀acyl, or aminocarbonyl which is N-substituted with C₁-C₂₀hydrocarbon group, based on the polyadduct.

7. A solid electrolytic capacitor according to Claim 1, wherein said electrically conductive thermoplastic organic polymer complex contains as a polyheteroaromatic compound a polypyrrole of the formula 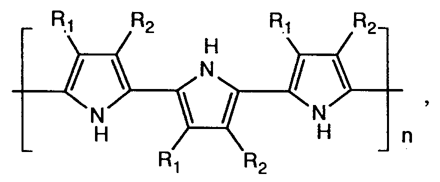 wherein R₁ and R₂ each and independently represent hydrogen or C₁-C₁₈alkyl, and n is a number of at least 5.

8. A solid electrolytic capacitor according to Claim 1, wherein the thickness of the valve metal foil is from 1.0 µm to 1.0 mm.

9. A solid electrolytic capacitor according to Claim 1, wherein the thickness of the valve metal foil is from 30 µm to 300 µm.

10. A solid electrolytic capacitor according to Claim 1, wherein the dielectric film is an oxide of the valve metal.

11. A solid electrolytic capacitor according to Claim 10, wherein an electrically conductive film from the group of metalls, metall compounds and electrochemical polymerized heterocyclic aromatic compounds is coated on said dielectric film.

12. A solid electrolytic capacitor according to Claim 11, wherein the metal is selected from the group consisting of aluminum, titanium, cobalt, nickel, copper, zinc, ruthenium, rhodium, palladium, silver, indium, tin, iridium, thallium, tungsten, platinum and gold.

13. A solid electrolytic capacitor according to Claim 11, wherein the metal compound is selected from the group of the metal oxides titanium oxide, vanadium oxide, manganese oxide, ruthenium oxide, rhodium oxide, indium oxide, tin oxide, osmium oxide, iridium oxide, cobalt oxide, nickel oxide, lead oxide and iron oxide.

14. A solid electrolytic capacitor according to Claim 11, wherein heterocyclic aromatic compound is pyrrole.

15. A process for preparing a solid electrolytic capacitor, which comprises laminating a film of electrically conductive thermoplastic organic polymer complex, obtained by electrochemical or chemical oxidation polymerization of a heteroaromatic compound, aniline or an aniline derivative in the presence of a thermoplastic polyanion, onto a valve metal foil with heating to a temperature of not lower than the glass transition temperature of said polymer complex.
